# DEMANDE DE BREVET EUROPEEN

(11) **EP 1 591 005 A2**
(43) Date de publication de la demande: **02.11.2005**
(21) Numéro de dépôt: 05300305.9
(22) Date de dépôt: 21.04.2005
(51) Int. Cl.: A01G 17/06

(54) **Ecarteur pour le relevage de vignes**

(30) Priorité: 27.04.2004 FR 0450791
(71) Demandeur: CASTERS, Denis, 51270 MAREUIL EN BRIE (FR)
(72) Inventeur: CASTERS, Denis, 51270 MAREUIL EN BRIE (FR)
(74) Mandataire: Rhein, Alain

(57) **Abrégé**

L'invention concerne un écarteur (1) pour le relevage de la vigne, cet écarteur (1) étant défini par conformation d'un fil métallique et comporte, d'une part, des moyens de fixation (3) permettant de le rendre solidaire d'un piquet de vigne (2), notamment en son extrémité supérieure, et, d'autre part, deux branches (9, 10) écartées pourvues, chacune, d'un berceau (11, 12) pour la réception d'un fil de palissage (15, 16) s'étendant selon un axe (17, 18).

Cet écarteur (1) est caractérisé par le fait que l'une (9) au moins des branches (9, 10) de cet écarteur (1) comporte des moyens (19) agencés pour assurer une immobilisation de cette branche (9) par rapport au fil de palissage (15 ; 16) associé à cette branche (9) ou à l'autre branche (10), ceci selon une direction axiale (17 ; 18) de ce fil (15 ; 16) et en position de relevage de la vigne.

## Description

L'invention a trait à un écarteur pour le relevage de la vigne.

Cette invention concerne le domaine de la fabrication des accessoires pour le traitement et la culture de la vigne et trouvera une application toute particulière lorsqu'il s'agit de procéder au relevage d'une vigne donc à son palissage.

Lors de la croissance des sarments de vigne et du développement de la végétation, il arrive un moment où il est nécessaire de procéder au relevage de cette vigne.

Pour ce faire, il est connu de faire appel à des fils de palissage, s'étendant le long d'une rangée de piquets de vigne, usuellement groupés par paire, et disposés de part et d'autre d'un tel piquet. Ces fils de palissage sont rendus solidaires d'un tel piquet par l'intermédiaire d'un écarteur fixé sur ce piquet, notamment à proximité de son extrémité supérieure. Un tel écarteur est, usuellement, défini par un fil métallique conformé en sorte de présenter deux branches, d'une part, venant se positionner de manière sensiblement symétrique par rapport audit piquet et, d'autre part, formant un dièdre ouvert vers le haut et, d'autre part encore, présentant à leur extrémité libre un berceau pour la réception d'un fil de palissage.

Lors de l'opération de relevage de la vigne, l'on procède au relevage des fils de palissage et au rapprochement des branches de cet écarteur que l'on maintien dans une position sensiblement verticale. Pour assurer un tel maintien, il est connu, soit de disposer une agrafe à cheval par-dessus les fils de palissage, soit de faire coopérer un crochet équipant une branche de l'écarteur avec l'autre branche de cet écarteur.

On observera que ces fils de palissage, en position de relevage de la vigne, ont tendance à s'affaisser sous l'effet du poids et de la poussée de la végétation. Cet affaissement entraîne l'écarteur qui glisse par rapport aux fils de palissage, bascule par rapport au piquet et s'éloigne de ce dernier. Il en résulte un affaissement général des fils de palissage et, par conséquent, de la vigne ce qui est préjudiciable à la surface foliaire, à la maturation des grains de raisin et à l'administration des produits de traitement de la vigne.

La présente invention se veut à même de remédier aux inconvénients des écarteurs de l'état de la technique.

A cet effet, l'invention concerne un écarteur pour le relevage de la vigne, cet écarteur étant défini par conformation d'un fil métallique et comporte, d'une part, des moyens de fixation permettant de le rendre solidaire d'un piquet de vigne, notamment en son extrémité supérieure, et, d'autre part, deux branches écartées pourvues, chacune, d'un berceau pour la réception d'un fil de palissage s'étendant selon un axe, caractérisé par le fait que l'une au moins des branches de cet écarteur comporte des moyens agencés pour assurer une immobilisation de cette branche par rapport au fil de palissage associé à cette branche ou à l'autre branche, ceci selon une direction axiale de ce fil et en position de relevage de la vigne.

Selon une autre caractéristique de l'invention, les moyens d'immobilisation d'une branche par rapport au fil de palissage associé à cette branche sont constitués par des moyens pour coincer ce fil définis au niveau du berceau de réception de ce fil que comporte cette branche.

Encore une autre caractéristique de l'invention consiste en ce que les moyens d'immobilisation d'une branche par rapport au fil de palissage associé à l'autre branche sont constitués par des moyens pour coincer ce fil définis au niveau d'un crochet équipant l'extrémité de ladite branche et conçu apte à s'accrocher sur le fil de palissage associé à l'autre branche.

Une autre caractéristique concerne le fait que, d'une part, chaque branche de cet écarteur comporte des moyens agencés pour assurer une immobilisation d'une telle branche par rapport au fil de palissage associé à l'autre branche, ceci selon une direction axiale de ce fil et, d'autre part, le crochet des moyens d'immobilisation associé à une branche présente une longueur différente de celle du crochet associé à l'autre branche.

Selon une caractéristique additionnelle, les moyens pour coincer un fil sont constitués par une conformation en V d'une portion de l'écarteur définie, selon le cas, au niveau du berceau ou du crochet, et présentant deux brins.

En fait, les deux brins des moyens de coincement forment un angle au sommet compris entre 20 et 60°, de préférence, de l'ordre de 45°.

Selon une caractéristique additionnelle, la conformation en V des moyens de coincement est réalisée par déformation, notamment par pliage, du fil métallique définissant ledit écarteur, plus particulièrement au niveau d'une portion de ce fil constituant ou prolongeant un berceau associé à ladite branche comportant les moyens d'immobilisation.

Selon une autre caractéristique de l'invention, l'écarteur est conformé en sorte que, en position de repos, les branches s'étendent en s'écartant l'une de l'autre, ceci à partir des moyens de fixation.

En fait, l'une au moins des branches adopte, en position de repos, une courbure et s'écarte de l'autre branche en divergeant.

De plus, l'écarteur est conformé avec une précontrainte ayant tendance à ramener les branches dans la position de repos de l'écarteur.

Encore une autre caractéristique consiste en ce que l'écarteur est conformé en sorte que, en position de relevage de la vigne, l'une au moins des branches soit rectiligne.

Finalement, les moyens de fixation sont définis par au moins une boucle pour la réception d'un organe de fixation de l'écarteur sur le piquet.

Les avantages de la présente invention consistent en ce que la branche de l'écarteur vient s'immobiliser axialement sur le fil de palissage associé à cette branche ou à l'autre branche de cet écarteur. Par le biais de cette immobilisation l'on empêche la branche dudit écarteur de glisser par rapport au fil sous l'effet de la végétation et l'on empêche, ainsi, le basculement de cet écarteur par rapport au piquet de sorte que cet écarteur reste en position de relevage maximal des fils de palissage.

L'invention est exposée plus en détail dans la description qui va suivre se rapportant à des modes de réalisation donnés à titre d'exemples et illustrés dans les figures des dessins ci-joints.

La figure 1 est une vue schématisée d'un écarteur selon l'invention en position de repos et avant sa fixation sur un piquet de vigne, ceci selon un premier mode de réalisation d'un tel écarteur.

La figure 2 est une vue schématisée de l'écarteur représenté figure 1 rapporté sur un piquet de vigne.

La figure 3 est une vue schématisée de l'écarteur représenté figure 2 en position de relevage de la vigne.

La figure 4 est une vue schématisée d'un écarteur selon l'invention en position de repos et avant sa fixation sur un piquet de vigne, ceci selon un second mode de réalisation d'un tel écarteur.

La figure 5 est une vue schématisée de l'écarteur de la figure 4 en position de relevage de la vigne.

La figure 6 est une vue schématisée d'un lien apte à rendre l'écarteur solidaire d'un piquet de vigne.

La présente invention concerne le domaine de la fabrication des accessoires pour le traitement et la culture de la vigne.

Tel que visible sur les figures en annexe, l'invention concerne un écarteur 1 pour le relevage de la vigne.

Un tel écarteur 1 est défini par conformation d'un fil métallique, plus particulièrement un fil en acier de type acier ressort, notamment un acier inoxydable ou galvanisé.

Cet écarteur 1 est destiné à être rendu solidaire d'un piquet 2 de vigne, plus particulièrement au niveau de l'extrémité supérieure d'un tel piquet 2.

Pour ce faire, un tel écarteur 1 comporte des moyens de fixation 3 permettant de le rendre solidaire de ce piquet 2.

Selon un premier mode de réalisation non représenté, de tels moyens de fixation 3 peuvent être définis par une conformation du fil en forme de cavalier apte à être engagé par-dessus ledit piquet 2 et, notamment apte à coopérer avec des découpes ou des moyens d'accrochage définis au niveau d'un tel piquet 2.

Selon un autre mode de réalisation visible sur les figures en annexe, de tels moyens de fixation 3 peuvent être constitués par au moins une boucle 4 définie par une conformation du fil.

Une telle boucle 4 se situe, sensiblement, dans un plan dans lequel s'étend ledit écarteur 1.

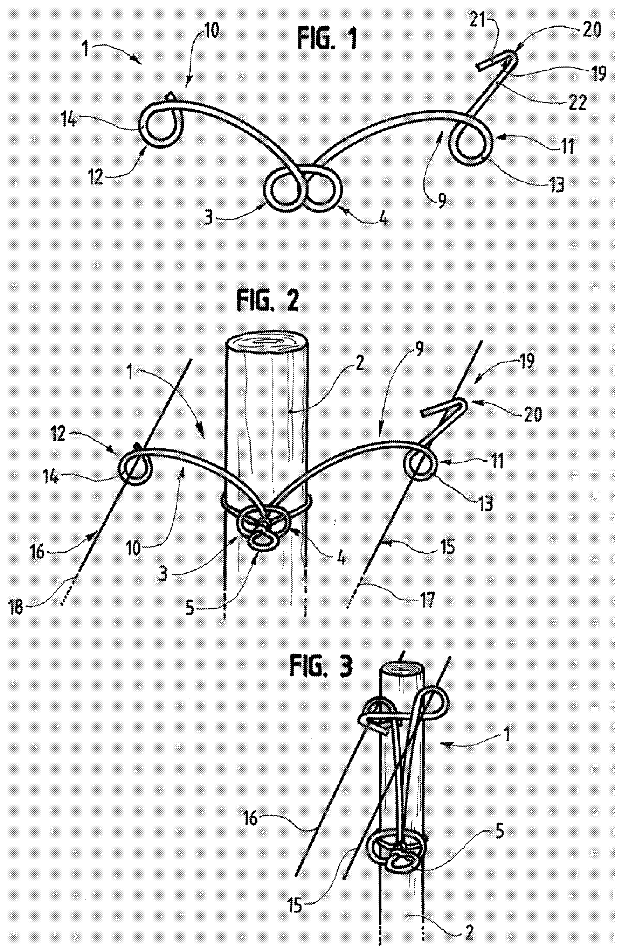

A ce propos, on observera que lors de la mise en place de cet écarteur 1 sur le piquet 2, il peut être fait appel à un crampillon ou à un lien 5 (figures 2, 3 et 5) apte à coopérer avec une telle boucle 4 ainsi qu'avec le piquet 2.

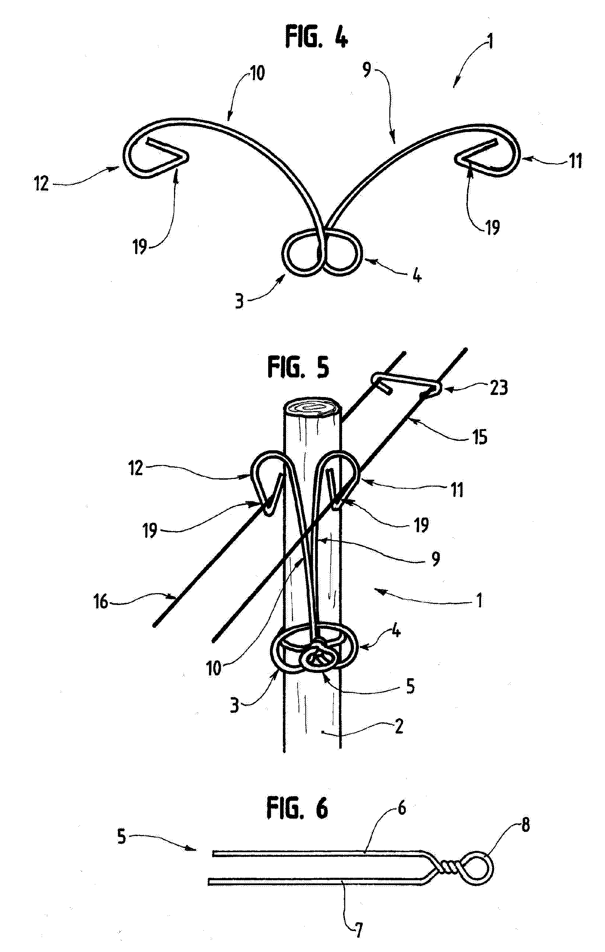

Tel que visible figure 6, un tel lien 5 peut être constitué par un fil (plus particulièrement de type recuit et/ou en inox) plié et conformé en sorte de définir deux brins 6, 7 torsadés de manière à délimiter un oeillet 8 à l'intérieur duquel peut être engagé un levier qui, par rotation, permet d'assurer un serrage de ce lien 5 sur le piquet 2 et, par conséquent, une fixation de l'écarteur 1 sur ce dernier 2. Un tel lien 5 est, de préférence, préfabriqué.

En ce qui concerne ledit écarteur 1, celui-ci comporte, encore, deux branches 9, 10 écartées s'étendant à partir des moyens de fixation 3. Ces branches 9, 10 se situent, plus particulièrement, dans le prolongement de la ou des boucles 4 de ces moyens de fixation 3.

A ce propos, on observera que cet écarteur 1 est conformé en sorte que, en position de repos (visible figures 1, 2 et 4), ces branches 9, 10 s'étendent en s'écartant l'une 9 de l'autre 10, ceci à partir desdits moyens de fixation 3.

Selon un premier mode de réalisation non représenté, ces branches 9, 10 adoptent une forme rectiligne en position de repos de l'écarteur 1.

Cependant et selon un mode préféré de réalisation visible figures 1, 2 et 4, cet écarteur 1 est conformé en sorte que, en position de repos, l'une 9 au moins des branches 9, 10 (mais de préférence les deux branches 9, 10) adopte une courbure et s'écarte de l'autre branche 10 en divergeant.

Selon une autre caractéristique, un tel écarteur 1 est conformé avec une précontrainte ayant tendance à ramener les branches dans la position de repos de l'écarteur 1.

En fait, un tel écarteur 1 est de type élastique et est conçu en sorte que, après suppression d'une contrainte y exercée (notamment un contrainte liée au palissage de la vigne), il retrouve sa position de repos susmentionnée.

Une caractéristique additionnelle consiste en ce que l'écarteur 1 est conformé en sorte que, en position de relevage de la vigne, l'une 9 au moins des branches 9, 10 (mais de préférence les deux branches 9, 10) soit rectiligne. Un tel mode de réalisation permet, avantageusement, à cet écarteur 1 de résister à un effort de compression, exercé par les fils de palissage 15, 16 sur les branches 9, 10 de cet écarteur 1, et qui résulte du poids de la végétation reposant par-dessus ces fils 15, 16.

Chaque branche 9, 10 de cet écarteur 1 comporte, notamment à proximité de l'extrémité libre d'une telle branche 9 ; 10, un berceau 11 ; 12, plus particulièrement défini par une conformation en boucle 13 ; 14 du fil de l'écarteur 1.

Chaque berceau 11 ; 12 est conçu pour la réception d'un fil de palissage 15 ; 16 s'étendant, chacun, selon un axe 17 ; 18.

Selon l'invention, l'une 9 au moins des branches 9, 10 de cet écarteur 1 comporte des moyens 19 agencés pour assurer une immobilisation de cette branche 9 par rapport au fil 15 ; 16 de palissage associé à cette branche 9 ou à l'autre branche 10, ceci selon une direction axiale 17 ; 18 de ce fil 15 ; 16 et en position de relevage de la vigne.

Un mode de réalisation particulier consiste en un écarteur 1 dont chacune des branches 9, 10 comporte de tels moyens d'immobilisation 19 (notamment figures 4 et 5).

Selon un premier mode de réalisation illustré figures 1 à 3 en annexe, les moyens d'immobilisation 19 d'une branche 9 par rapport au fil de palissage 16 associé à l'autre branche 10 sont constitués par des moyens pour coincer ce fil 16 définis au niveau d'un crochet 20, équipant l'extrémité de ladite branche 9, et conçu apte à s'accrocher sur le fil de palissage 16 associé à l'autre branche 10.

Un tel crochet 20 équipe, plus particulièrement l'extrémité libre d'une telle branche 9 et peut être rapporté (notamment par soudure) sur cette branche 9. Un mode préféré de réalisation consiste, cependant, en ce qu'un tel crochet 20 est défini par une conformation appropriée du fil métallique de l'écarteur 1, ceci au niveau de l'extrémité libre de ladite branche 9, plus particulièrement en aval d'un berceau 11. En fait, ce crochet 20 est, de préférence, réalisé par déformation, notamment par pliage, du fil métallique définissant ledit écarteur 1. Une telle déformation (ou un tel pliage) est, plus particulièrement, réalisée au niveau d'une portion de ce fil prolongeant un tel berceau 11.

En ce qui concerne lesdits moyens pour coincer un fil, ceux-ci sont constitués par une conformation en V d'une portion de l'écarteur 1 définie au niveau dudit crochet 20. Cette portion conformée en V présente deux brins 21, 22.

Les deux brins 21, 22 de ces moyens de coincement forment un angle au sommet compris entre 20 et 60°, de préférence, de l'ordre de 45°.

Un tel mode de réalisation permet à un tel crochet 20 de coopérer avec des fils de palissage de sections différentes.

Un premier mode de réalisation illustré sur les figures 1 à 3 en annexe consiste en ce que l'un 21 au moins des brins 21, 22 du crochet 20 en V (mais de préférence ces deux brins 21, 22) est conformé de manière rectiligne.

Un autre mode de réalisation non représenté concerne l'un 21 au moins des brins 21, 22 du crochet 20 en V qui adopte une courbure et s'écarte de l'autre brin 22 en divergeant.

En fait et tel que visible sur la figure 3, un tel crochet 20 est conçu pour venir se coincer sur le fil de palissage 16.

Au travers d'un tel coincement, il est évité, d'une part, à ce crochet 20 de glisser par rapport au fil de palissage 16 et, d'autre part, à l'écarteur 1 de basculer par rapport au piquet 2 en s'éloignant de ce dernier 2.

Selon un autre mode de réalisation non représenté, chaque branche 9, 10 comporte des moyens 19 agencés pour assurer une immobilisation d'une telle 9 ; 10 branche par rapport au fil de palissage 16 ; 15 associé à l'autre branche 10 ; 9, ceci selon une direction axiale de ce fil 16 ; 15. Dans un pareil cas, le crochet 20 des moyens d'immobilisation 19 associé à une branche 9 présente une longueur différente de celle du crochet associé à l'autre branche 10. Un tel mode de réalisation permet, avantageusement, d'employer un même écarteur 1, soit pour des vignes dans lesquelles les fils de palissage 15, 16 sont plus ou moins éloignés l'un de l'autre, soit pour des piquets 2 de vigne de sections différentes.

Tel qu'évoqué ci-dessus, l'écarteur 1 est conformé en sorte que les branches 9, 10 sont écartées l'une 9 de l'autre 10, ceci en position de repos de l'écarteur 1.

Un tel écarteur 1 est, en fait, conformé avec une certaine précontrainte qui a tendance, d'une part et en l'absence de contrainte, à maintenir, et, d'autre part et après suppression d'une telle contrainte, à ramener les branches 9, 10 de cet écarteur 1 dans cette position de repos.

C'est à l'encontre de cette précontrainte que l'on assure le palissage de la vigne ainsi que l'immobilisation d'une branche 9 par rapport au fil de palissage 16 associé à l'autre branche 10.

C'est cette même précontrainte qui a tendance, lorsque le crochet 20 est accroché par-dessus ledit fil de palissage 16, à faire s'écarter les branches 9, 10 et, par conséquent, à assurer une traction du crochet 20 sur ce fil 16 qui s'engage plus profondément encore dans l'ouverture du crochet 20.

Selon un autre mode de réalisation illustré figures 4 et 5 en annexe, les moyens d'immobilisation 19 d'une branche 9 ; 10 par rapport au fil de palissage 15 ; 16 associé à cette branche 9 ; 10 sont constitués par des moyens pour coincer ce fil 15 ; 16 définis au niveau du berceau 11 ; 12 de réception de ce fil 15 ; 16 que comporte cette branche 9 ; 10.

Là encore, ces moyens pour coincer un fil sont constitués par une conformation en V d'une portion de l'écarteur 1 définie au niveau dudit berceau 11 ; 12. Cette portion conformée en V présente deux brins 21, 22.

Les deux brins 21, 22 de ces moyens de coincement forment un angle au sommet compris entre 20 et 60°, de préférence, de l'ordre de 45°.

Un tel mode de réalisation permet à un berceau 11 ; 12 de coopérer avec des fils de palissage de sections différentes.

Un premier mode de réalisation illustré sur les figures 4 et 5 en annexe consiste en ce que l'un 21 au moins de ces brins 21, 22 (mais de préférence ces deux brins 21, 22) est conformé de manière rectiligne.

Un autre mode de réalisation non représenté concerne l'un 21 au moins des brins 21, 22 qui adopte une courbure et s'écarte de l'autre brin 22 en divergeant.

En fait et tel que visible sur la figure 5, les moyens de coincement sont conçus en sorte que le fil de palissage 15 ; 16 vienne se coincer dans la conformation en V du berceau 11 ; 12 correspondant, ceci sous l'effet du poids de la végétation venant reposer par-dessus lesdits fils de palissage 15 ; 16, ceci après l'opération de relevage de la vigne.

Au travers d'un tel coincement, il est évité, d'une part, à un tel berceau 11 ; 12 de glisser par rapport au fil de palissage 15 ; 16 et, d'autre part, à l'écarteur 1 de basculer par rapport au piquet 2 en s'éloignant de ce dernier 2.

En ce qui concerne les branches 9, 10 d'un tel type d'écarteur 1, celles-ci sont, là encore, écartées l'une 9 de l'autre 10, ceci en position de repos de l'écarteur 1 (figure 4).

Là encore, un tel écarteur 1 est conformé avec une certaine précontrainte qui a tendance, d'une part et en l'absence de contrainte, à maintenir, et, d'autre part et après suppression d'une telle contrainte, à ramener les branches 9, 10 de cet écarteur 1 dans cette position de repos.

C'est à l'encontre de cette précontrainte que l'on assure le palissage de la vigne ainsi que l'immobilisation d'une branche 9 par rapport à l'autre branche 10.

Il convient d'observer que les figures 4 et 5 illustrent un mode de réalisation pour lequel les deux branches 9, 10 de l'écarteur 1 comportent des moyens d'immobilisation 19 sachant que ceci correspond à un mode de réalisation préféré de l'invention et qu'un autre mode de réalisation pour lequel une seule branche 9 de cet écarteur 1 comporte de tels moyens d'immobilisation peut aussi être envisagé.

En ce qui concerne les modes de réalisation pour lesquels les moyens d'immobilisation 19 sont définis au niveau d'un berceau 11, 12 que comporte l'écarteur 1 (figures 4 et 5), on observera que le maintien de cet écarteur 1 dans sa position de relevage de la vigne peut être assuré par le biais, soit d'une agrafe 23 (manuelle ou mécanique) indépendante dudit écarteur 1 et disposée à cheval par-dessus les deux fils de palissage 15, 16 (figure 5), soit de crochets équipant l'extrémité libre de chaque branche et conçus aptes à coopérer avec un moyen d'accrochage que présente un piquet 2 de vigne, notamment un rebord d'accrochage défini au niveau d'une gorge que présente un tel piquet 2.

## Revendications

1. Ecarteur (1) pour le relevage de la vigne, cet écarteur (1) étant défini par conformation d'un fil métallique et comporte, d'une part, des moyens de fixation (3) permettant de le rendre solidaire d'un piquet de vigne (2), notamment en son extrémité supérieure, et, d'autre part, deux branches (9, 10) écartées pourvues, chacune, d'un berceau (11, 12) pour la réception d'un fil de palissage (15, 16) s'étendant selon un axe (17, 18), **caractérisé par le fait que** l'une (9) au moins des branches (9, 10) de cet écarteur (1) comporte des moyens (19) agencés pour assurer une immobilisation de cette branche (9) par rapport au fil de palissage (15 ; 16) associé à cette branche (9) ou à l'autre branche (10), ceci selon une direction axiale (17 ; 18) de ce fil (15 ; 16) et en position de relevage de la vigne.

2. Ecarteur (1) pour le relevage de la vigne, selon la revendication 1, **caractérisé par le fait que** les moyens d'immobilisation (19) d'une branche (9 ; 10) par rapport au fil de palissage (15 ; 16) associé à cette branche (9 ; 10) sont constitués par des moyens pour coincer ce fil (15 ; 16) définis au niveau du berceau (11 ; 12) de réception de ce fil (15 ; 16) que comporte cette branche (9 ; 10).

3. Ecarteur (1) pour le relevage de la vigne, selon la revendication 1, **caractérisé par le fait que** les moyens d'immobilisation (19) d'une branche (9 ; 10) par rapport au fil de palissage (16 ; 15) associé à l'autre branche (10 ; 9) sont constitués par des moyens pour coincer ce fil définis au niveau d'un crochet (20) équipant l'extrémité de ladite branche (9 ; 10) et conçu apte à s'accrocher sur le fil (16 ; 15) de palissage associé à l'autre branche (10 ; 9).

4. Ecarteur (1) pour le relevage de la vigne, selon la revendication 3, **caractérisé par le fait que**, d'une part, chaque branche (9 ; 10) de cet écarteur (1) comporte des moyens (19) agencés pour assurer une immobilisation d'une telle branche (9 ; 10) par rapport au fil de palissage (16 ; 15) associé à l'autre branche (10 ; 9), ceci selon une direction axiale (18 ; 17) de ce fil (16 ; 15) et, d'autre part, le crochet (20) des moyens d'immobilisation (19) associé à une branche (9 ; 10) présente une longueur différente de celle du crochet (20) associé à l'autre branche (10 ; 9).

5. Ecarteur (1) pour le relevage de la vigne, selon l'une quelconque des revendications 2 à 4, **caractérisé par le fait que** les moyens pour coincer un fil sont constitués par une conformation en V d'une portion de l'écarteur (1) définie, selon le cas, au niveau du berceau (11 ; 12) ou du crochet (20), et présentant deux brins (21 ; 22).

6. Ecarteur (1) pour le relevage de la vigne, selon la revendication 5, **caractérisé par le fait que** les deux brins (21 ; 22) des moyens de coincement forment un angle au sommet compris entre 20 et 60°, de préférence, de l'ordre de 45°.

7. Ecarteur (1) pour le relevage de la vigne, selon l'une quelconque des revendications 5 ou 6, **caractérisé par le fait que** la conformation en V des moyens de coincement est réalisée par déformation, notamment par pliage, du fil métallique définissant ledit écarteur (1), plus particulièrement au niveau d'une portion de ce fil constituant ou prolongeant un berceau (11 ; 12) associé à ladite branche (9 ; 10) comportant les moyens d'immobilisation (19).

8. Ecarteur (1) pour le relevage de la vigne, selon l'une quelconque des revendications précédentes, **caractérisé par le fait que** l'écarteur (1) est conformé en sorte que, en position de repos, les branches (9 ; 10) s'étendent en s'écartant l'une (9) de l'autre (10), ceci à partir des moyens de fixation (3).

9. Ecarteur (1) pour le relevage de la vigne, selon l'une quelconque des revendications précédentes, **caractérisé par le fait que** l'une (9) au moins des branches (9 ; 10) adopte, en position de repos, une courbure et s'écarte de l'autre branche (10) en divergeant.

10. Ecarteur (1) pour le relevage de la vigne, selon l'une quelconque des revendications précédentes, **caractérisé par le fait que** l'écarteur (1) est conformé avec une précontrainte ayant tendance à ramener les branches (9 ; 10) dans la position de repos de l'écarteur (1).

11. Ecarteur (1) pour le relevage de la vigne, selon l'une quelconque des revendications précédentes, **caractérisé par le fait que** l'écarteur (1) est conformé en sorte que, en position de relevage de la vigne, l'une (9) au moins des branches (9 ; 10) soit rectiligne.

12. Ecarteur (1) pour le relevage de la vigne, selon l'une quelconque des revendications précédentes, **caractérisé par le fait que** les moyens de fixation (3) sont définis par au moins une boucle (4) pour la réception d'un organe (5) de fixation de l'écarteur (1) sur le piquet (2).
